# EUROPEAN PATENT APPLICATION

(11) **EP 4 484 610 A1**
(43) Date of publication of application: **01.01.2025**
(21) Application number: 23181533.3
(22) Date of filing: 26.06.2023
(51) Int. Cl.: C23C 28/00, C23C 28/04, F16J 9/26, F16J 9/02, C23C 30/00

(54) **SLIDING ELEMENT, COMBUSTION ENGINE AND METHOD**

(71) Applicant: MAHLE International GmbH, 70376 Stuttgart (DE)
(72) Inventor: AVELAR ARAÚJO, Dr. Juliano, 3040-382 Coimbra (PT); DE SOUSA MAZUCO, Felipe, 13209460 Jundiaí (BR); ALVES, Richard, 4705-780 Braga (PT)
(74) Representative: BRP Renaud & Partner mbB Rechtsanwälte Patentanwälte Steuerberater

(57) **Abstract**

The invention relates to a sliding element (1), in particular for an internal combustion engine, with a base body (2) made of a metal and with a DLC protective coating (3) made of amorphous carbon present on the base body (2). Furthermore, the sliding element (1) comprises a sealing layer (4) arranged on the DLC protective coating (3), comprising an organic material, wherein the sealing layer (4) comprises a semiconductor material in addition to the organic material, in particular is doped with such a semiconductor material.

## Description

The invention relates to a sliding element, in particular for an internal combustion engine, and an internal combustion engine with such a sliding element. The invention further relates to a method of manufacturing such a sliding element.

The running surfaces of piston rings are reinforced for use in modern internal combustion engines with the aid of hard protective coatings which, in addition to their high hardness, also have very good frictional properties. Particularly hard and abrasion-resistant DLC (diamond-like carbon) coatings are used to harden the running surfaces of piston rings, especially in highly stressed internal combustion engines and in engines used in the heavy-duty sector, which must therefore have a particularly long service life. Such DLC coatings not only have a very high hardness but also a particularly low coefficient of friction, which is particularly advantageous for the operation of the piston ring in an internal combustion engine, e.g. through increased seizure resistance.

Such a sliding element is described, for example, in DE 10 2017 210 559 A1.

A disadvantage of such DLC coatings is that they react with oxygen, in particular from the combustion chamber of an internal combustion engine, at least in an area close to the surface, which can lead to undesirable corrosion of the sliding element.

It is therefore an object of the present invention to show new ways in the development of sliding elements, in particular piston rings for internal combustion engines. In particular, an improved embodiment for such a sliding element is to be created, which is characterized by improved corrosion resistance with simultaneous high hardness and thus high wear resistance and also by very good sliding properties.

This object is achieved by the subject-matter of the independent patent claims. Preferred embodiments are the subject of the dependent patent claims.

Accordingly, the basic idea of the invention is to arrange on the DLC protective coating of the sliding element a sealing layer of an organic material which is doped with semiconductor material.

The organic material, which is used as a physical barrier and can be applied to the surface of the DLC protective coating, fluid-tightly closes the surface porosity of the DLC protective coating and thus acts as a sealant. As a result, the reactivity of the DLC protective coating with oxygen is greatly restricted and, ideally, even completely prevented. As a result, the desired improved wear resistance of the sliding element is realized. Further, by means of the semiconductor material, the thermal stability of the polymer is significantly improved.

The sliding element according to the invention comprises a, preferably ringshaped, base body made of a metal. Further, the sliding element comprises a protective DLC coating of amorphous carbon provided on the base body, preferably on an outer periphery of the annular base body. Furthermore, the sliding element comprises a sealing layer arranged on the DLC protective coating, comprising an organic material, the sealing layer comprising a semiconductor material, in particular being doped with such a semiconductor material.

In a preferred embodiment, the sealing layer comprises or is a polymer layer comprising organic polymers. Capillary impregnation or sealing with these organic polymers is particularly effective in limiting the reaction of the DLC protective coating with oxygen.

Particularly preferably, the sealing layer or polymer layer may comprise a silicone resin. Such a silicone resin, which preferably has a low viscosity, can penetrate particularly deeply into the porous structures of the amorphous carbon present on the surface of the DLC protective coating and impregnate it. The low-viscosity system is well-suited to penetrate deeply into highly porous structures by capillary force and to seal them gas- and/or liquid-tight.

In a preferred embodiment, the semiconductor material of the sealing layer can be or comprise silicon or/and boron. By means of silicon or boron, respectively, can increase the thermal resistance of the polymer can be increased, thereby avoiding eventual degradation along its life time. Additionally, the silicon can react with the oxygen producing a passivation thereby avoiding the penetration of oxygen trough DLC film.

In a further preferred embodiment, a weight fraction of the semiconductor material in the sealing layer is between 1 wt% and 25 wt%. Below 1wt%, the thermal stability of the polymer would be lost. Above 25 wt%, semiconductor material will increase the viscosity of the polymer losing its capillarity behavior. It will reduce drastically the capacity of polymer penetrate into DLC porosity. This is mandatory in order the polymer can cover all surface of DLC avoiding the direct contact with oxygen from combustion gases.

In another preferred embodiment, the DLC protective coating contains less than 4 wt% hydrogen. By means of this property of the DLC protective coating, the wear resistance of the DLC protective coating is further increased.

Particularly preferably, more than 50% of the bonds formed in the amorphous carbon of the DLC protective coating are formed by sp2 bonds. - Hydrogen-free amorphous carbon layers, a-C, consist predominantly of sp2 hybridized bonds and are therefore also referred to as graphite-like carbon layers. They provide advantageous sliding properties for the sliding element.

Alternatively, or additionally, in this variant between 25% and 45% of the bonds formed in the amorphous carbon of the DLC protective coating are formed by sp3 bonds. Since the mechanical properties of the sp3 bonds are responsible for diamond-like properties of the DLC protective coating, the selected proportion of this bond form ensures a high hardness of the DLC protective coating.

Particularly expediently, a layer thickness of the DLC protective coating is between 2 micrometers and 40 micrometers. Alternatively, or additionally, in this variant, a layer thickness of the adhesion layer is between 0.5 micrometers and 2 micrometers.

Particularly expediently, a hardness of the DLC protective coating may be between 20 GPa and 65 GPa, preferably between 20 GPa and 50 GPa.

In another preferred embodiment, the metal of the base body may be a steel containing 10 wt% to 17 wt% chromium (Cr), particularly preferably the balance of the steel may be formed by carbon steel and cast iron.

According to an advantageous further development, the sliding element can be a piston ring for an internal combustion engine. In this case, the piston ring has an annular geometry. However, the piston ring and thus also the base body can also be designed as an open piston ring with a piston joint, as is known to those skilled in the art. In this further development, the adhesion layer, the DLC protective coating and the sealing layer are arranged on an outer circumference of the base body.

According to a further advantageous further development, the piston ring has a central longitudinal axis and extends along a circumferential direction around the central longitudinal axis and also has a piston joint which is bounded in the circumferential direction by a first and a second joint flank. Here, the sealing layer can be provided on the DLC protective coating along an outer circumference extending between the two abutting flanks along the circumferential direction. Alternatively, the sealing layer can also be provided on the DLC protective coating only in two outer circumferential sections extending away from the first or second abutting flank. In this case, the outer circumferential sections extend along the circumferential direction, starting from the respective piston joint, over a circumferential angle of at most 20° measured along the circumferential direction.

According to an advantageous further development, the sliding element comprises a metallic adhesion layer, preferably sandwiched, between the DLC protective coating and the base body, which layer preferably contains chromium (Cr) and/or titanium (Ti) and/or copper (Cu). The adhesion layer ensures compensation of mechanical stresses between the metallic structure of the base body and the DLC protective coating, which is subject to particularly high mechanical stresses, and also ensures excellent adhesion of the DLC protective coating to the metallic base body.

The invention also relates to an internal combustion engine, in particular for a motor vehicle. The internal combustion engine comprises at least one cylinder surrounding a combustion chamber. A piston is adjustably arranged in the combustion chamber, which piston has at least one annular groove on its outer circumference. A sliding element according to the invention, which can preferably be designed as a piston ring as explained above, is arranged in this annular groove. The advantages of the sliding element according to the invention explained above are therefore transferred to the internal combustion engine according to the invention. The sliding element accommodated in the annular groove can be supported, in particular radially inwardly, on the piston and, in particular radially outwardly, on the cylinder of the internal combustion engine.

The invention further relates to a method of manufacturing a sliding element according to the invention presented above. The advantages of the sliding element according to the invention explained above are therefore also transferred to the method according to the invention. The method comprises two steps a) and b). In step a), the base body is provided with the DLC protective coating and, optionally, the adhesion layer. In step b), the top coat is applied to the DLC protective coating by one of the following measures:
- Immersion in a bath of the material of the top coat;
- Spraying on the material of the top coat;
- Spraying on the material of the sealing layer.

Further important features and advantages of the invention will be apparent from the sub-claims, from the drawings and from the accompanying figure description with reference to the drawings.

It is understood that the above features and those to be explained below are usable not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

The following is shown schematically in each case:
- Fig. 1: shows an exemplary illustration of the design of the sliding element according to the invention,
- Fig. 2: illustrates the design of the sliding element of Figure 1 as a piston ring.

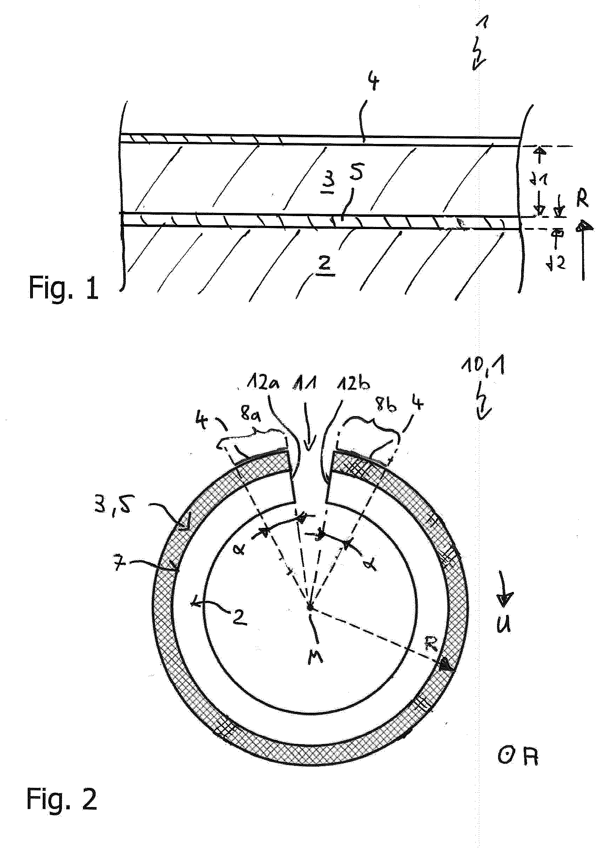

Figure 1 shows a rough schematic illustration of the structure of the sliding element 1 according to the invention. The sliding element 1 comprises a base body 2 made of a metal. The metal of the base body 2 may be a steel containing 10 wt.% to 17 wt.% chromium (Cr). The remaining components of the steel may be formed by carbon steel and cast iron.

Further, the sliding element 1 comprises a protective DLC coating 3 of amorphous carbon disposed on the base body 2, preferably on an outer circumference 7 of the annular base body 2. In the example scenario, the DLC protective coating 3 contains less than 4% by weight of hydrogen. Furthermore, more than 50% of the bonds formed in the amorphous carbon of the DLC protective coating 3 may be formed by sp2 bonds. Furthermore, between 25% and 45% of the bonds formed in the amorphous carbon of the DLC protective coating 3 may be formed by sp3 bonds. As a result, the DLC protective coating 3 achieves a hardness between 20 GPa and 65 GPa, preferably between 20 GPa and 50 GPa. A layer thickness d1 of the DLC protective coating 3 may be between 2 micrometers and 40 micrometers.

Furthermore, the sliding element 1 comprises a sealing layer 4 arranged on the DLC protective coating 3. The sealing layer 4 is formed by an organic material doped with semiconductor material - for example silicon or boron. The sealing layer 4 may be a polymer layer comprising organic polymers. Particularly, the sealing layer or polymer layer may comprise a silicone resin. In the example, a weight percentage of the semiconductor material in the sealing layer 4 is between 1 wt% and 25 wt%.

Finally, the sliding element 1 according to Figure 1 comprises a metallic adhesion layer containing chromium (Cr) and/or titanium (Ti) and/or copper (Cu) sandwiched between the DLC protective coating 3 and the base body 2. A layer thickness d2 of the adhesion layer 5 can be between 0.5 micrometers and 2 micrometers.

As illustrated in Figure 2, the sliding element 1 may be a piston ring 10 for an internal combustion engine. In this case, the piston ring 10 has an annular geometry. The piston ring has a central longitudinal axis M extending along an axial direction A. Figure 2 shows the piston ring 10 in a plan view along this axial direction A. A radial direction extends perpendicular to the axial direction A away from the central longitudinal axis M. A circumferential direction U runs perpendicular to both the axial direction A and the radial direction R around the central longitudinal axis M.

The piston ring 10 and thus also the base body 2 can be designed in a manner known to those skilled in the art as an open piston ring 10 with a piston joint 11 as shown in Figure 2.

In this further development, the adhesion layer 5, the DLC protective coating 3 and the sealing layer 4 are arranged on an outer circumference 7 of the base body 2.

The piston ring 10 has a central longitudinal axis M. The piston ring 10 extends along a circumferential direction U revolving around the central longitudinal axis M and also has a piston joint 11 which is bounded in the circumferential direction U by a first and a second joint flank 12a, 12b. The sealing layer 4 may be provided on the DLC protective coating 3 along an outer circumference 7 extending between the two abutting flanks 12a, 12b along the circumferential direction U, which is not shown in Figure 2. Alternatively, however, the sealing layer 4 can also be provided on the DLC protective coating 3 - as shown in Figure 2 - only in two outer circumferential sections 8a and 8b extending away from the first and second abutting flanks 12a, 12b, respectively. In this case, the two outer circumferential sections 8a or 8b extend, starting from the respective abutting flanks 12a, 12b, in the circumferential direction U or opposite to the circumferential direction U over a circumferential angle α, measured along the circumferential direction U, of at most 20°.

The sliding element 1 according to the invention, explained above by means of an example, can be produced by means of the method according to the invention. This process comprises two steps a) and b). In the first step a), the base body 2 is provided with the DLC protective coating 3 and the adhesion layer 5. In the second step b), the sealing layer 4 is applied to the DLC protective coating 3 by one of the following measures: - immersion in a bath of the material of the sealing layer 4; - spraying of the material of the sealing layer 4; - spraying of the material of the sealing layer 4.

Particularly, the organic material can be deposited by spraying with an air pressure between 1.5 bar to 3.0 bar and a deposition velocity of 0.2 - 2.0 m/s, by immersion of the sliding element in a container, by automatic contact printing technology with a contact pressure between 2 to 7 bar or by manual brushing process.

## Claims

1. Sliding element (1), in particular for an internal combustion engine,
- having a, preferably annular, base body (2) made of a metal,
- with a DLC protective coating (3) of amorphous carbon provided on the base body (2), particularly on an outer circumference (7) of the base body (2),
- with a sealing layer (4) arranged on the DLC protective coating (3), comprising an organic material, the sealing layer (4) comprising, in addition to the organic material, a semiconductor material, in particular being doped with a semiconductor material of this type,

2. Sliding element according to claim 1,
**characterized in that**
the sealing layer (4) is a polymer layer comprising organic polymers.

3. Sliding element according to claim 1 or 2,
**characterized in that**
the sealing layer (4) or polymer layer comprises a silicone resin.

4. Sliding element according to any one of claims 1 to 3,
**characterized in that**
the semiconductor material of the sealing layer (4) is silicon (Si) or boron (B).

5. Sliding element according to any one of the preceding claims,
**characterized in that**
a proportion by weight of the semiconductor material in the sealing layer (4) is between 1% by weight and 25% by weight.

6. Sliding element according to any one of the preceding claims,
**characterized in that**
the DLC protective coating (3) contains less than 4 wt% hydrogen.

7. Sliding element according to any of the preceding claims,
**characterized in that**
- more than 50% of the bonds formed in the amorphous carbon of the DLC protective coating (3) are formed by sp2 bonds; or/and that
- between 25% and 45% of the bonds formed in the amorphous carbon of the DLC protective coating (3) are formed by sp3 bonds.

8. Sliding element according to any of the preceding claims,
**characterized in that**
- a layer thickness (d1) of the DLC protective coating (3) is between 2 micrometers and 40 micrometers; or/and **in that**
- a layer thickness (d2) of the adhesion layer (5) is between 0.5 micrometers and 2 micrometers.

9. Sliding element according to one of the preceding claims,
**characterized in that**
a hardness of the DLC protective coating (3) is between 20 GPa and 65 GPa, preferably between 20 GPa and 550 GPa.

10. Sliding element according to any one of the preceding claims,
**characterized in that**
the metal of the base body (2) is a steel containing from 10% to 17% by weight of chromium (Cr), preferably the balance being constituted by carbon steel and cast iron.

11. Sliding element according to one of the preceding claims,
**characterized in that**
the sliding element (1) is a piston ring (10) for an internal combustion engine, wherein the adhesion layer (5), the DLC protective coating (3) and the sealing layer (4) are arranged on an outer circumference (6) of the base body (2).

12. Sliding element according to claim 11,
**characterized in that**
- the piston ring (10) has a central longitudinal axis (M) and extends along a circumferential direction (U) running around the central longitudinal axis (M) and has a piston joint (11) which is bounded in the circumferential direction (U) by a first and a second joint flank (12a, 12b),
- wherein the sealing layer (4) is provided on the DLC protective coating (3) along an outer circumference (7) extending between the two abutting flanks (12a, 12b) along the circumferential direction (U), or wherein the sealing layer (4) is provided only in two outer circumferential sections (8a, 8b) extending away from the first and second impact flank (12a, 12b), respectively, on the DLC protective coating (3), the outer circumferential sections (8a, 8b) extending along the circumferential direction (U), starting from the respective piston impact (12a, 12b), over a circumferential angle (α) of at most 20° measured along the circumferential direction (U).

13. Sliding element according to one of the preceding claims,
**characterized in that**
a metallic adhesion layer (5) is arranged between the DLC protective coating (3) and the base body (2), wherein preferably the adhesion layer (5) contains chromium (Cr) and/or titanium (Ti) and/or copper (Cu)..

14. Internal combustion engine, in particular for a motor vehicle,
- with at least one cylinder surrounding a combustion chamber,
- wherein a piston adjustably arranged in the combustion chamber, which piston has at least one annular groove on its outer circumference, in which annular groove a sliding element (1) according to one of the preceding claims is arranged.

15. Method for producing a sliding element (1) according to one of claims 1 to 13, comprising the following steps:
(a) providing the base body (2) with the DLC protective coating (3);
b) applying the sealing layer (4) to the DLC protective coating (3) by one of the following measures:
- Immersing in a bath of the material of the top coat;
- Spraying on the material of the sealing layer (4);
- Spraying on the material of the sealing layer (4).
